## Europäisches Patentamt

## European Patent Office

## Office européen des brevets

(11) Veröffentlichungsnummer: **0 254 876**
**B1**

(12)

# EUROPÄISCHE PATENTSCHRIFT

(45) Veröffentlichungstag der Patentschrift:
**31.01.90**

(21) Anmeldenummer: **87109162.5**

(22) Anmeldetag: **25.06.87**

(51) Int. Cl.⁴: **B29C 65/48,** B29D 31/00
// B29L31/08

(54) **Druckwirksames Arbeitsgerät.**

(30) Priorität: **30.07.86 DE 3625758**

(43) Veröffentlichungstag der Anmeldung:
**03.02.88 Patentblatt 88/5**

(45) Bekanntmachung des Hinweises auf die Patenterteilung:
**31.01.90 Patentblatt 90/5**

(84) Benannte Vertragsstaaten:
**FR GB IT**

(56) Entgegenhaltungen:
**CH-A- 384 195**
**DE-A- 2 540 050**
**DE-B- 1 627 766**
**US-A- 2 614 955**

(73) Patentinhaber: **Messerschmitt-Bölkow-Blohm
Gesellschaft mit beschränkter Haftung,
Robert-Koch-Strasse, D-8012 Ottobrunn(DE)**

(72) Erfinder: **Vordermeier, Alfred,
Pfarrer-Birnkammerstrasse 14c, D-8208 Kolbermoor(DE)**

ACTORUM AG

**Beschreibung**

Die Erfindung betrifft ein Arbeitsgerät gemäß dem Oberbegriff des Patentanspruchs 1.

Bekanntlich ist bisher die Handarbeit bei der Herstellung von Rotorblättern aus faserverstärktem Kunststoff, z.B. für Drehflügelflugzeuge, weitgehend unentbehrlich, so daß nach wie vor das Bestreben nach Arbeitsgeräten besteht, welche den Fertigungsaufwand reduzieren und möglichst wenig handwerkliches Geschick bzw. Erfahrung voraussetzen. Ein in diesem Rahmen zum Aufbringen von Anpreß- bzw. Klebedruck zum Verkleben von Formteilen eines Blattflügels durch die DE-B 1 627 776 bekanntes Arbeitsgerät der eingangs genannten Art hat allerdings den Mangel, daß die gewählte Ausbildung als aufblasbarer Druckbeutel dessen Anwendung auf eine Positionierung in einer bzw. in Verbindung mit einer Form für das Blattprofil beschränkt. Das bekannte Arbeitsgerät ist folglich beispielsweise zum Andrücken einer gewölbten Schutzschale, wie Erosionsschutzschale, an ein bereits entformtes Blattprofil eines Rotorblattes nicht ohne weiteres geeignet. Außerdem würden sich dabei Festigkeitsminderungen der Klebverbindung infolge Lufteinschlüssen in der Klebmasse zwischen der Schutzschale und der Blattoberfläche nicht ausschließen lassen.

Der Erfindung liegt daher die Aufgabe zugrunde, ein gegen solche Lufteinschlüsse der Klebmasse wirksames Arbeitsgerät zu schaffen.

Diese Aufgabe ist bei einem Arbeitsgerät der eingangs genannten Art mit den Kennzeichnenden Merkmalen des Patentanspruchs 1 gelöst, demnach durch eine eigenständig handhabbare Gerätekonfiguration, welche ein stufenweises Andrücken der Deckschale an die Schicht und damit, je nach Anzahl der Kammern, ein wenigstens annäherndes Massieren bzw. überstreichen derselben vom Schichtzentrum aus zum Schichtrand hin ermöglicht mit der zwangsläufigen Folge einer entsprechend gerichteten Luftverdrängung zwischen der Schicht und der Bauteiloberfläche. Es hat sich bei Erosionsschutzschalen an Rotorblättern erwiesen, daß eine solche durch die Erfindung ohne unmttelbare manuelle Handhabung mögliche Methode der Intervalldruckausübung zu einer beträchlichen Steigerung der Verbindungssicherheit führt.

Die Erfindung wird nachfolgend anhand von Ausführungsbeispielen der in den Unteransprüchen gekennzeichneten bevorzugten Ausgestaltungen näher erläutert. Dabei zeigt die Zeichnung in den

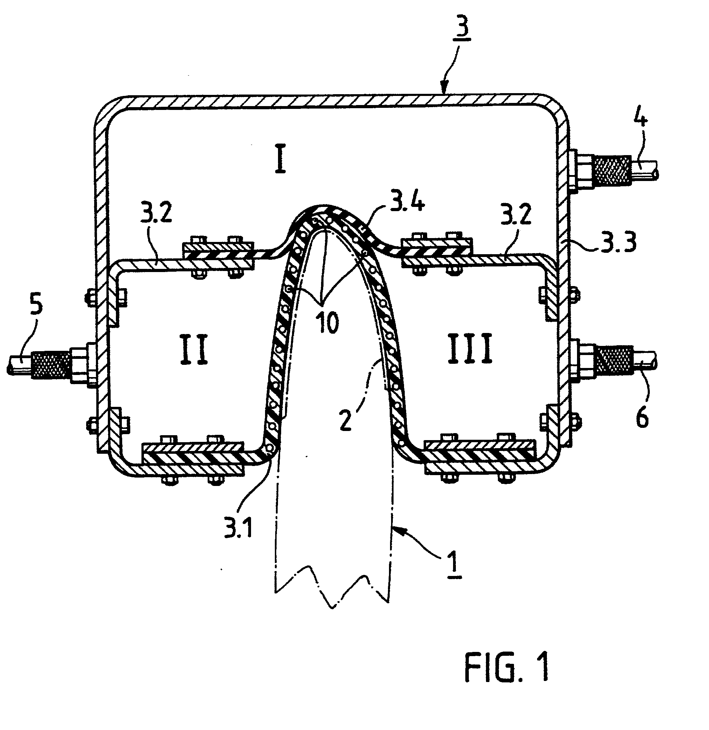

Fig. 1 bis 3 jeweils das Querschnittsprofil des Nasenbereichs eines Rotorblattes in Verbindung mit einem auf dessen Erosionsschutzschale druckwirksamen Arbeitsgerät.

Die in den Fig. 1 bis 3 dargestellten an den beiden nicht ersichtlichen Stirnseiten z.B. durch anschraubbare Deckplatten o. dgl. verschlossenen Arbeitsgeräte sollen Fügedruck auf eine mit der Blattnase eines Rotorblattes 1 zu verklebende Erosionsschutzschale 2 ausüben, wozu sie die Form einer auf die Blattnase aufsetzbaren, im Querschnitt entsprechend U-förmig gestalteten, hohlen Haube 3 aufweisen. welcher über Versorgungsleitungen 4, 5 und 6 Druckluft zugeführt wird. Die Druckluft kommt über eine zugleich als Wandungsinnenteil der Haube 3 fungierende biegeweiche Deckschale 3.1 auf der Erosionsschutzschale 2 zur Wirkung. Die Druckwirkung dieser vorzugsweise als sog. Silikon-Heizmatte ausgebildeten Deckschale 3.1 ist so steuerbar, daß Lufteinschlüsse in einer nicht dargestellten Klebmasse zwischen der Oberfläche des Rotorblattes 1 bzw. dessen Blattnase und der Erosionsschutzschale 2 von deren Zentrum aus zum Außenrand hin entweichen können bzw. dahin verdrängt werden. Zu diesem Zweck ist die einzelne Arbeitsgeräte-Haube 3 in (mindestens) drei von einander getrennte Kammern I, II und III unterteilt mit je einer gesonderten Druckluftversorgung bzw. eigenen Versorgungsleitung 4, 5 bzw. 6. Hierdurch wird eine partielle Druckbeaufschlagung der Deckschale 3.1 und folglich der Erosionsschutzschale 2 in dem Sinne ermöglicht, daß zunächst nur auf deren von der Kammer I überdeckten Bereich Fügedruck ausgeübt wird bis zum weitgehenden Verdrängen von Lufteinschlüssen in den Schalenrandbereich und daß erst hiernach auf den von den beiden übrigen Kammern II und III jeweils überdeckten Randbereich der Erosionsschutzschale 2 Fügedruck ausgeübt wird bis zur gänzlichen Luftverdrängung aus der Klebefuge.

Für diese Methode der Intervalldruckausübung kann selbstverständlich, je nach Abmessung der Erosionsschutzschale 2, die Haube 3 längs der Schalenschenkel in weitere Paare einander gegenüberliegender Kammern unterteilt sein. Eine wesentliche Voraussetzung ist die Abdichtung bzw. Trennung der Kammern I, II und III untereinander, wobei zugleich die Haube 3 dem jeweiligen Blattquerschnittsprofil wenigstens in Grenzen anpaßbar bzw. daran in Blattlängsrichtung verschiebbar sein soll. Dazu sind bei allen drei Ausführungsformen der Arbeitsgeräte-Haube 3 die Kammern I, II und III durch Trennwände 3.2 abgegrenzt, welche nur mit deren Wandungsaußenteil 3.3 (einschließlich der vorgenannten, nicht dargestellten stirnseitigen Deckplatten) vereinigt sind. Zur Abdichtung ist hierbei im Falle der baulich einfachsten Ausführungsform gemäß Fig. 1 lediglich eine Vereinigung der beiden Trennwände 3.2 über eine wenigstens biegeweiche Deckschale 3.4 z.B. aus Gummi vorgesehen.

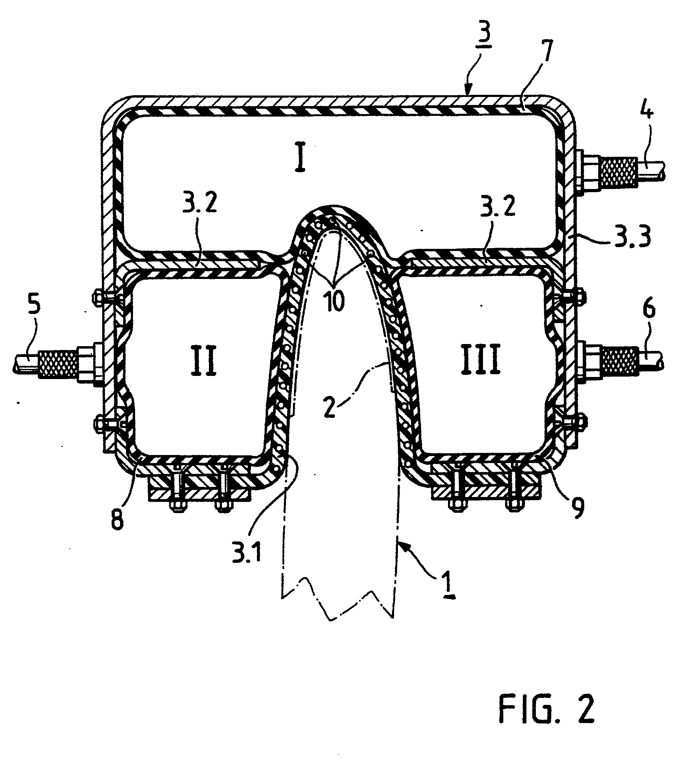

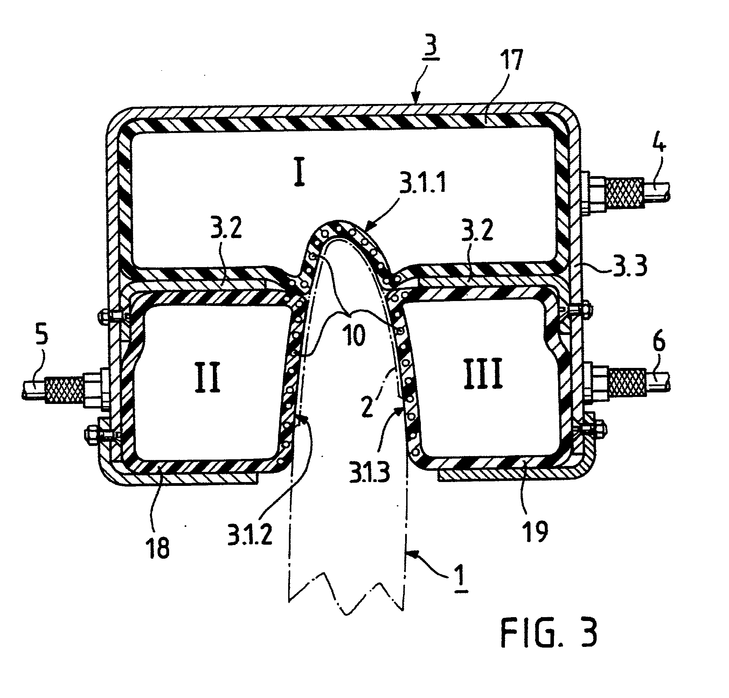

Demgegenüber wird bei der Ausführungsform der Arbeitsgeräte-Haube 3 gemäß Fig. 2 das Problem der Abdichtung der Kammern I, II und III untereinander durch je einen darin angeordneten Luft- bzw. Druckschlauch 7, 8 bzw. 9 gelöst. Eine derartige Ausführungsform kann schließlich gemäß Fig. 3 noch derart ausgestaltet werden, daß die Deckschale 3.1 gemäß Fig. 1 und 2 in der Anzahl der Kammern I, II und III entsprechende Abschnitte 3.1.1 , 3.1.2 bzw. 3.1.3 unterteilt ist und diese jeweils einen Teil des in der betreffenden Kammer angeordneten Druckschlauches 17, 18 bzw. 19 (z.B. aus Silikon) bilden. Auch diese Deckschalen-Abschnitte 3.1.1, 3.1.2 und 3.1.3 können selbstverständlich wie die einstückige Deckschale 3.1 mit Heizleitern 10 ausgestattet sein.

Das Arbeitsgerät gemäß der Erfindung ist allgemein verwendbar, soweit flächige Profilbauteile beidseitig zu beschichten sind.

**Patentansprüche**

1. Druckwirksames Arbeitsgerät zum Ausüben von Fügedruck auf eine mit einem profilierten Bauteil (1) zu verklebende Schicht (2) über eine wenigstens biegeweiche Deckschale (3.1) mittels Druckluft, wobei die Deckschale (3.1) das Wandungsinnenteil einer im beschichteten Bereich dem Bauteil (1) aufsetzbaren, hohlen Haube (3) ist, welche in voneinander getrennte, jeweils gesondert mit Druckluft speisbare Kammern (I, II, III) derart unterteilt ist, daß die Schicht (2) partiell druckbeaufschlagbar ist, dadurch gekennzeichnet, daß die Haube (3) im Querschnitt U-förmig gestaltet und wenigstens drei Kammern (I, II, III) aufweist, von denen eine Kammer (I) das Zentrum der Schicht (2) und die beiden übrigen einander gegenüberliegenden Kammern (II, III) je einen Schichtschenkel überdecken, wobei die Kammern (I, II, III) durch Trennwände (3.2) begrenzt und diese nur mit dem Wandungsaußenteil (3.3) der Haube (3) vereinigt sind.

2. Gerät nach Anspruch 1, dadurch gekennzeichnet daß die Kammertrennwände (3.2) miteinander über eine wenigstens biegeweiche Deckschale (3.4) vereinigt sind.

3. Gerät nach Anspruch 1, dadurch gekennzeichnet, daß die Kammern (I, II, III) mit je einem Druckschlauch (7, 8 bzw. 9; 17, 18 bzw. 19) versehen sind (Fig. 2 bzw. 3).

4. Gerät nach Anspruch 1, dadurch gekennzeichnet, daß die Deckschale (3.1) in der Anzahl der Kammern (I, II, III) entsprechende Abschnitte (3.1.1, 3.1.2 bzw. 3.1.3) unterteilt ist, und diese jeweils einen Teil eines in der betreffenden Kammer (I, II bzw. III) angeordneten Druckschlauches (17, 18 bzw. 19) bilden (Fig. 3).

5. Gerät nach Anspruch 1 oder 4, dadurch gekennzeichnet, daß die Deckschale (3.1) bzw. deren Abschnitte (3.1.1, 3.1.2, 3.1.3) mit Heizmitteln (10) ausgestattet sind.

**Claims**

1. Pressure-operated working apparatus for exerting adhesive pressure onto a layer (2) to be adhered to a shaped construction member (1) by way of an at least flexible cover shape (3.1) through compressed air, whereby the cover shape (3.1) is the interior section of a wall of a hollow cap (3) disposed over the construction member (1) within the layered region, which hollow cap is divided into chambers (I, II, III) separated from each other and each indivudually supplied with compressed air in such a manner that the layere (2) is partially pressure-chargeable, characterized by the cap (3) being cross-sectionally U-shaped and having at least three chambers (I, II, III) one of which embraces the centre of the layer (2) and the other two chambers (II, III) – positioned opposite each other – embrace one shank side each whereby the chambers (I, II, III) are limited by dividing walls (3.2) which are only joined with the exterior section of the wall (3.3) of cap (3).

2. Apparatus according to claim 1, characterized by the chambers' dividing walls (3.2) being joined with each other via an at least flexible cover shape (3.4).

3. Apparatus according to claim 1, characterized by the chambers (I, II, III) each being provided with a pressure hose (7, 8 or 9 respectively; 17, 18 or 19 respectively) (Fig. 2 or 3 respectively).

4. Apparatus according to claim 1, characterized by the cover shape (3.1) being divided into a number of sections (3.1.1, 3.1.2 or 3.1.3 respectively) corresponding with the number of chambers (I, II, III); and said sections each forming part of a pressure hose (17, 19 or 19 respectively) disposed in a respective chamber (I, II or III respectively) (Fig. 3).

5. Apparatus according to claim 1 or 4, characterized by the cover shape (3.1) or their sections (3.1.1, 3.1.2, 3.1.3) respectively being provided with a heating medium (10).

**Revendications**

1. Outil de travail agissant par pression pour exercer une pression d'assemblage sur une couche (2) devant être collée sur une pièce profilée (1), par l'intermédiaire d'une coque de recouvrement (3.1) au moins flexible, à l'aide d'air comprimé, la coque de recouvrement (3.1) étant la partie intérieure de paroi d'un capot creux (3) qui peut être mis en place sur la pièce (1) dans la zone comportant la couche et est divisé en chambres (I, II, III) séparées les unes des autres et pouvant être alimentées séparément en air comprimé de telle sorte que la couche (2) puisse être partiellement sollicitée en pression, caractérisé en ce que le capot (3) présente une section transversale en U et au moins trois chambres (I, II, III) dont l'une (I) recouvre la partie médiane de la couche (2) tandis que les deux autres chambres (II, III) se faisant face recouvrent chacune une branche de la couche, les chambres (I, II, III) étant délimitées par des parois de séparation (3.2) et ces dernières étant réunies uniquement avec la partie extérieure de paroi (3.3) du capot (3).

2. Outil selon la revendication 1, caractérisé en ce que les parois de séparation de chambres (3.2) sont réunies entre elles par une coque de recouvrement (3.4) au moins flexible.

3. Outil selon la revendication 1, caractérisé en ce que les chambres (I, II, III) sont munies chacune d'un tuyau de pression (7, 8 et 9; 17, 18 et 19) (Fig. 2 et 3).

4. Outil selon la revendication 1, caractérisé en ce que la coque de recouvrement (3.1) est divisée en tronçons (3.1.1, 3.1.2 et 3.1.3) correspondant au nombre des chambres (I, II, III) et que lesdits tronçons forment chacun une partie d'un tuyau de pression (17, 18 et 19) disposé dans la chambre concernée (I, II, III) (Fig. 3).

5. Outil selon la revendication 1 ou 4, caractérisé en ce que la coque de recouvrement (3.1), à savoir ses tronçons (3.1.1, 3.1.2, 3.1.3) sont équipés de moyens chauffants (10).

FIG. 1

FIG. 2

FIG. 3